# EUROPEAN PATENT SPECIFICATION

(11) **EP 4 395 414 B1**
(45) Date of publication and mention of the grant of the patent: **28.01.2026**
(21) Application number: 22880194.0
(22) Date of filing: 08.10.2022
(51) Int. Cl.: H04W 36/08, H04W 48/02, H04W 48/12, H04W 48/08, H04W 48/16, H04W 48/20

(54) **COMMUNICATION METHOD**
KOMMUNIKATIONSVERFAHREN
PROCÉDÉ DE COMMUNICATION

(30) Priority: 13.10.2021 CN 202111193246
(43) Date of publication of application: 03.07.2024
(60) Divisional application: 25204796.4
(73) Proprietor: Huawei Technologies Co., Ltd., Shenzhen, Guangdong 518129 (CN)
(72) Inventor: XIE, Xi, Shenzhen, Guangdong 518129 (CN); SHI, Yulong, Shenzhen, Guangdong 518129 (CN); CHEN, Lei, Shenzhen, Guangdong 518129 (CN); LI, Jiaojiao, Shenzhen, Guangdong 518129 (CN); CHANG, Junren, Shenzhen, Guangdong 518129 (CN)
(74) Representative: Pfenning, Meinig & Partner mbB
(86) International application number: PCT/CN2022/123780
(87) International publication number: WO 2023/061255

(56) References cited:
- WO-A1-2021/174913
- CN-A- 112 640 532
- CN-A- 112 640 532
- CN-A- 113 115 239
- CN-A- 113 383 580
- US-A1- 2022 417 811
- US-A1- 2024 040 477
- HUAWEI: "Summary of offline 110 - Identification and access restriction", 3GPP DRAFT; R2-2008192, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20200817 - 20200828, 1 September 2020 (2020-09-01), Mobile Competence Centre ; 650, route des Lucioles ; F-06921 Sophia-Antipolis Cedex ; France , XP051926213
- CHINA TELECOMMUNICATION: "Access and camping restrictions for RedCap UE", 3GPP DRAFT; R2-2108628, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210809 - 20210827, 6 August 2021 (2021-08-06), Mobile Competence Centre ; 650, route des Lucioles ; F-06921 Sophia-Antipolis Cedex ; France , XP052042916
- SAMSUNG: "Coexistence between legacy UEs and RedCap UEs", 3GPP DRAFT; R2-2006661, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20200817 - 20200828, 6 August 2020 (2020-08-06), Mobile Competence Centre ; 650, route des Lucioles ; F-06921 Sophia-Antipolis Cedex ; France , XP051910837

## Description

### TECHNICAL FIELD

Embodiments of this application relate to the communication field, and in particular, to a communication methods, apparatuses, a computer storage medium and computer program products.

### BACKGROUND

Three scenarios of 5th generation (5th generation, 5G) new radio (new radio, NR) include: enhanced mobile broadband (enhanced mobile broadband, eMBB), ultra-reliable and low-latency communication (ultra-reliable and low-latency communication, URLLC), and massive machine type of communication (massive machine type of communication, mMTC).

Reduced capability user equipment (reduced capability UE, RedCap UE) is a further enhancement to 5G NR. Capabilities of such terminals are lower than those of eMBB and URLLC. For example, the RedCap UE may have the following reduced feature complexities: reduced maximum bandwidth capability, reduced transceiver antenna/antenna branch (branch) quantity capability, reduced maximum multiple-input multiple-output (multiple-input multiple-output, MIMO) layer quantity capability, reduced maximum modulation order (modulation order) capability, and the like.

In the conventional technology, there are still some problems in an access control procedure of the RedCap UE, for example, low access efficiency and extra energy consumption. Therefore, a person skilled in the art is currently committed to optimizing the access control procedure of the RedCap UE.

Therefore, embodiments of this application are intended to resolve problems such as how to enable the RedCap UE to use different IFRIs when a cell is barred, to improve efficiency of such a terminal device to determine to perform a cell reselection operation, and how to design a UE behavior rule when a RedCap specific IFRI is not sent, to specify how the UE determines an intra-frequency reselection operation.
CN 112640532A discusses a method for communication including a radio access network providing a first-type user equipment with a parameter indicating whether access is allowed. Another method for communication includes: in response to a first-type UE failing to listen to a master information block (MIB) or listening to a cell bar identity in the MIB being cell barred, performing by the first-type UE, cell reselection according to a cell reselection mode of a second-type UE or according to a set mode.
WO2021/174913 relates to receiving a system message, i.e. MIB or SIB 1, by a reduced capability terminal device from a network device, wherein the RedCap terminal device determines based on the value of the of the intraFreqReselection field included in the system message whether it is allowed or not to perform intrafrequency reselection.

### SUMMARY

Embodiments of this application provide a communication methods, apparatuses, a computer storage medium and computer program products so that a terminal device (RedCap UE) can use different IFRIs when a cell is barred, to improve efficiency of the terminal device to determine to perform a cell reselection operation, and a behavior rule when a RedCap specific IFRI is not sent can be designed, to specify how the terminal device (the RedCap UE) determines an intra-frequency reselection operation. The claimed invention is set out in the appended set of claims.

It should be noted that, in this embodiment of this application, the terminal device is not limited to RedCap UE. In other words, this embodiment of this application is also applicable to a terminal that has a same or similar access control mechanism as the RedCap UE.

Based on this technical solution, the terminal device (the RedCap UE) receives the first information, and when the first information does not include the third indication information indicating whether to perform the intra-frequency reselection operation, the terminal device determines that the intra-frequency reselection operation is allowed. Therefore, a behavior rule when a RedCap specific IFRI is not sent is designed, to specify how the terminal device (the RedCap UE) determines the intra-frequency reselection operation.

With reference to the second aspect, in some implementations of the second aspect, the first information further includes fourth indication information, and the method further includes: The terminal device determines, based on the fourth indication information, that a current cell of the terminal device is barred. The fourth indication information indicates whether the current cell of the terminal device is barred.

With reference to the second aspect, in some implementations of the second aspect, the terminal device is reduced capability user equipment RedCap UE.

According to a third aspect, a communication method is provided, including: A network device sends a master information block MIB, where the MIB includes first indication information and second indication information, the first indication information indicates whether a cell is barred, and the second indication information indicates whether an intra-frequency reselection operation is allowed. When the first indication information indicates that the cell is barred, the network device indicates, based on the second indication information, whether a terminal device performs the intra-frequency reselection operation. The terminal device is reduced capability user equipment RedCap UE.

Based on this technical solution, the network device sends the master information block MIB to the terminal device (the RedCap UE), and when the first indication information in the MIB indicates that the current cell is barred, the second indication information in the MIB indicates whether to perform the intra-frequency reselection operation. In this way, the terminal device (the RedCap UE) can use different IFRIs when the cell is barred, to improve efficiency of the terminal device to determine to perform a cell reselection operation.

According to a fourth aspect, a communication method is provided, including: A network device sends first information. When the first information does not include third indication information, the network device indicates a terminal device to determine that an intra-frequency reselection operation is allowed. The third indication information indicates whether the intra-frequency reselection operation is allowed.

Based on this technical solution, the network device sends the first information to the terminal device (the RedCap UE), and when the first information does not include the third indication information indicating whether to perform the intra-frequency reselection operation, indicates that the terminal device is allowed to perform the intra-frequency reselection operation. Therefore, a behavior rule when a RedCap specific IFRI is not sent is designed, to specify how the terminal device (the RedCap UE) determines the intra-frequency reselection operation.

With reference to the fourth aspect, in some implementations of the fourth aspect, the first information further includes fourth indication information, and the method further includes: The fourth indication information indicates that a current cell of the terminal device is barred.

With reference to the fourth aspect, in some implementations of the fourth aspect, the terminal device is reduced capability user equipment RedCap UE.

According to a fifth aspect, a communication apparatus is provided, including: a receiving unit, configured to receive a master information block MIB, where the MIB includes first indication information and second indication information, the first indication information indicates whether a cell is barred, and the second indication information indicates whether an intra-frequency reselection operation is allowed; and a processing unit, configured to: when the first indication information indicates that the cell is barred, determine, based on the second indication information, whether to perform the intra-frequency reselection operation. The terminal device is reduced capability user equipment RedCap UE.

According to a sixth aspect, a communication apparatus is provided, including: a receiving unit, configured to receive first information; and a processing unit, configured to: when the first information does not include third indication information, determine that an intra-frequency reselection operation is allowed. The third indication information indicates whether the intra-frequency reselection operation is allowed.

With reference to the sixth aspect, in some implementations of the sixth aspect, the first information further includes fourth indication information, and the processing unit is further configured to determine, based on the fourth indication information, that a current cell of the terminal device is barred. The fourth indication information indicates whether the current cell of the terminal device is barred.

With reference to the sixth aspect, in some implementations of the sixth aspect, the terminal device is reduced capability user equipment RedCap UE.

According to a seventh aspect, a communication apparatus is provided, including: a sending unit, configured to send a master information block MIB, where the MIB includes first indication information and second indication information, the first indication information indicates whether a cell is barred, and the second indication information indicates whether an intra-frequency reselection operation is allowed; and a processing unit, configured to: when the first indication information indicates that the cell is barred, indicate, based on the second indication information, whether a terminal device performs the intra-frequency reselection operation. The terminal device is reduced capability user equipment RedCap UE.

According to a ninth aspect, a computer program product is provided. The computer program product includes a computer program (which may also be referred to as code or instructions). When the computer program is run, a computer is enabled to perform the method according to any one of the possible implementations of the first aspect to the fourth aspect.

According to a tenth aspect, a computer-readable medium is provided. The computer-readable medium stores a computer program (which may also be referred to as code or instructions). When the computer program is run on a computer, the computer is enabled to perform the method according to any one of the possible implementations of the first aspect to the fourth aspect.

### BRIEF DESCRIPTION OF DRAWINGS

FIG. 1 is a schematic diagram of a system architecture applied to this application;
FIG. 2 is a schematic flowchart of a communication method;
FIG. 3 is a schematic flowchart of a communication method;
FIG. 4 is a schematic flowchart of a communication method;
FIG. 5 is a schematic flowchart of a communication method;
FIG. 6 is a schematic flowchart of a communication method according to another embodiment of this application;
FIG. 7 is a schematic block diagram of an apparatus 700 according to this application;
FIG. 8 is a schematic block diagram of an apparatus 800 according to this application; and
FIG. 9 is a schematic diagram of a structure of an apparatus according to an embodiment of this application.

### DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

A terminal device may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like.

An access network device may be an evolved nodeB (evolved NodeB, eNB), a radio network controller (radio network controller, RNC), a nodeB (NodeB, NB), a base station controller (base station controller, BSC), a base transceiver station (base transceiver station, BTS), a home evolved NodeB (home NodeB, or home Node B, HNB), a baseband unit (baseBand unit, BBU), an access point (access point, AP) in a wireless fidelity (wireless fidelity, Wi-Fi) system, a radio relay node, a wireless backhaul node, a transmission point (transmission point, TP), a transmission and reception point (transmission and reception point, TRP), or the like. Alternatively, the access network device may be a gNB or a transmission point (a TRP or a TP) in a 5G system such as an NR system; may be an antenna panel or a group of antenna panels (including a plurality of antenna panels) of a base station in a 5G system; or may be a network node, such as a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that a network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Network element names may vary according to different network systems. The following describes this application by using naming of a network element in a 5G network as an example.

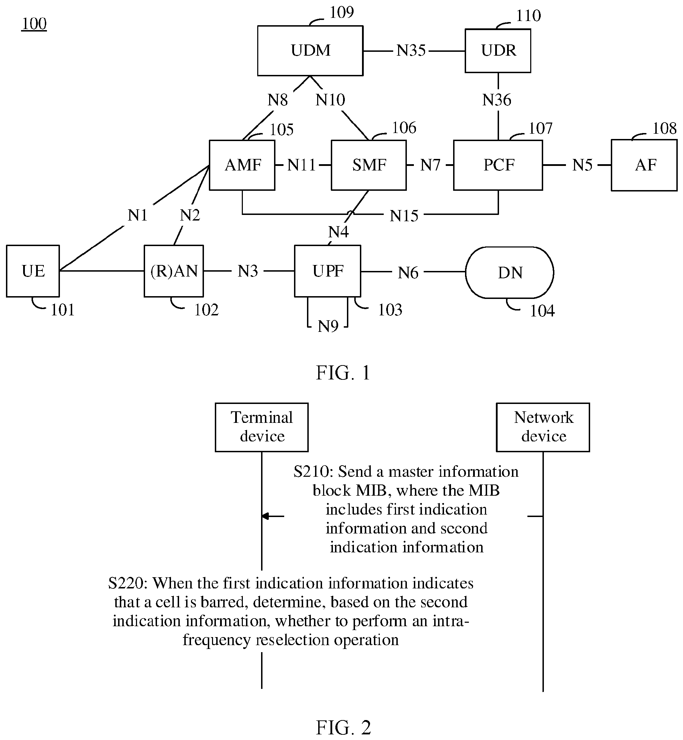

First, with reference to a schematic diagram of a 5G network architecture shown in FIG. 1, main network elements in a 5G network system are briefly described.
1. User equipment (user equipment, UE) 101 corresponds to a terminal device.
2. A (radio) access network (radio access network, (R)AN) network element 102, hereinafter referred to as a RAN, corresponds to an access network device. For example, the RAN may be an NB, an eNB, a gNB, a ng-eNB, or any other access network device.
3. A user plane function (user plane function, UPF) 103 is used to perform packet routing and forwarding, quality of service (quality of service, QoS) processing of user plane data, and the like.
4. A data network (data network, DN) 104 is used to provide a network for data transmission.
5. An AMF 105 corresponds to a mobility management network element.
6. A session management function (session management function, SMF) 106 is mainly used to perform session management, UE internet protocol (internet protocol, IP) address allocation and management, selection and management of a user plane function, termination of interfaces towards policy control and charging functions, downlink data notification, and the like.
7. A policy control function (policy control function, PCF) 107 is a unified policy framework for guiding network behavior, and provides policy rule information and the like for control plane function network elements (such as the AMF and the SMF).
8. An application function (application function, AF) 108 is used to perform application-affected data routing, access a network exposure function network element, or interact with a policy framework to perform policy control, or the like.
9. Unified data management (unified data management, UDM) 109 is used for UE identifier processing, access authentication, registration, mobility management, and the like.
10. A unified data repository (unified data repository, UDR) 110 mainly includes the following function: an access function for subscription data, policy data, application data, and the like.

It may be understood that these network elements or functions may be network elements in a hardware device, may be software functions running on dedicated hardware, or may be virtualized functions instantiated on a platform (for example, a cloud platform).

It should be understood that an interface between the network elements shown in FIG. 1 is merely an example, and this example should not constitute any limitation on this application.

It should be further understood that the network architecture applied to this embodiment of this application is merely an example, and a network architecture applicable to embodiments of this application is not limited thereto. Any network architecture that can implement functions of the network elements is applicable to embodiments of this application.

It should be further understood that an architecture of the 5G system shown in FIG. 1 is an application scenario/network architecture of embodiments of this application. Embodiments of this application may be further applied to another application scenario/network architecture, for example, a communication architecture between a terminal device and a gNB (a 5G base station) or a next-generation evolved NodeB (that is, a 4G base station connected to a core network) (next generation eNodeB, ng-eNB). This is not limited in embodiments of this application.

The foregoing content briefly describes a system architecture and a possible application scenario in embodiments of this application. To better understand the technical solutions in embodiments of this application, before embodiments of this application are described, nouns or terms in this application are first briefly described.

### 1. Reduced capability UE (reduced capability UE, RedCap UE)

RedCap UE is a terminal with reduced capabilities compared with enhanced mobile broadband (enhanced mobile broadband, eMBB) and ultra-reliable and low-latency communication (ultra-Reliable and low-latency communication, URLLC). For example, the RedCap UE may have the following reduced feature complexities: reduced maximum bandwidth capability, reduced transceiver antenna/antenna branch (branch) quantity capability, reduced maximum multiple-input multiple-output (multiple-input multiple-output, MIMO) layer quantity capability, reduced maximum modulation order (modulation order) capability, supporting half-frequency division duplex (frequency division duplex, FDD), and the like.

### 2. System information (system information, SI)

The system information is a message sent by a base station, and includes information required for UE initialization and information related to some other functions/features. The system information is classified into minimum system information (Minimum SI) and other system information (Other SI).

The minimum system information includes a master information block (master information block, MIB) and a system information block 1 (system information block 1, SIB 1). The SIB 1 is also referred to as remaining minimum system information (remaining minimum SI, RMSI). The MIB is periodically broadcast on a broadcast channel (broadcast channel, BCH). The SIB 1 is periodically broadcast on a downlink shared channel (downlink shared channel, DL-SCH) or sent to UE in an RRC connected (RRC_CONNECTED) mode through dedicated signaling.

The other system information includes other SIBs such as a SIB 2 to a SIB 9. The other SIBs are periodically broadcast on the DL-SCH, are broadcast on the DL-SCH on demand (on demand) (that is, a network broadcasts an SIB only when UE in an RRC idle (RRC_IDLE) mode or UE in an RRC inactive (RRC_INACTIVE) mode requests the SIB, and otherwise, the network does not send the SIB), or are sent to the UE in the RRC connected mode through dedicated signaling.

It should be noted that a basic procedure for the UE in the RRC idle mode and the UE in the RRC inactive mode to obtain the system information is as follows: The UE first obtains an MIB, obtains an SIB 1 based on scheduling information in the MIB, and then obtains another SIB based on scheduling information in the SIB 1.

### 3. Cell bar (cell bar) mechanism

It is an access control mechanism. In NR, a network sends a *cellBarred* (*cellBarred*) indication field in a master information block MIB. The field indicates whether a current cell is barred (barred) or not barred (not barred). If a cell is barred, UE in the RRC idle mode and UE in the RRC inactive mode cannot camp (camp) on the cell. In addition, the cell is not considered as a candidate cell for cell reselection (cell reselection) within a specific period of time.

### 4. Intra-frequency reselection (intra-frequency reselection) mechanism

In NR, a network sends an intra-frequency reselection indication (intra-frequency reselection indication, IFRI) field (*intraFreqReselection*) in a master information block MIB. The field indicates whether UE may consider a neighboring cell (that is, an intra-frequency neighboring cell) having a same frequency as that of the current cell to be a candidate cell for reselection when the current cell is barred. If this field indicates allowed (allowed), the UE can consider the intra-frequency neighboring cell when performing cell reselection. If this field indicates not allowed (not allowed), the UE cannot consider the intra-frequency neighboring cell as a candidate cell for cell reselection within a specific period of time.

RedCap UE is UE with reduced capabilities. When the RedCap UE accesses the network, compared with non-RedCap UE, the network may need to provide more resources for the RedCap UE or perform special scheduling for the RedCap UE. Therefore, it is agreed in a standard that the network needs to use a specific mechanism to perform access control specifically for RedCap.

In view of this, this application provides a communication method, so that a terminal device (RedCap UE) can use different IFRIs when a cell is barred, to improve efficiency of the terminal device to determine to perform a cell reselection operation, and a behavior rule when a RedCap specific IFRI is not sent can be designed, to specify how the terminal device (the RedCap UE) determines an intra-frequency reselection operation.

The following describes in detail a method provided in embodiments of this application with reference to the accompanying drawings. It should be noted that, in the following process of describing embodiments with reference to the accompanying drawings, the figures are merely for ease of understanding, and shall not constitute any limitation on this application. Names of the network elements are defined only for distinguishing between different functions, and shall not constitute any limitation on this application. This application does not exclude a possibility of defining another network element to implement a same or similar function.

FIG. 2 is a schematic flowchart of a communication method according to an embodiment of this application. The method includes at least the following steps.

S210: A network device sends a master information block MIB to a terminal device, and correspondingly, the terminal device receives the master information block MIB sent by the network device, where the master information block MIB includes first indication information and second indication information. The first indication information indicates whether a cell is barred, and the second indication information indicates whether an intra-frequency reselection operation is allowed.

S220: When the first indication information indicates that the cell is barred, the terminal device determines, based on the second indication information, whether to perform the intra-frequency reselection operation.

Specifically, the terminal device may be reduced capability user equipment RedCap UE. The first indication information may be a *cellBarred* field in the MIB, and the second indication information may be an *intraFreqReselection* field in the MIB.

In a possible implementation, the *cellBarred* field in the MIB received by the terminal device indicates that the cell is barred. For example, the *cellBarred* field is set to "barred". In this case, the terminal device determines that the terminal device cannot camp on the current cell. In this case, the terminal device determines, based on the second indication information (the *intraFreqReselection* field in the MIB), whether to perform the intra-frequency reselection operation.

Specifically, if the *intraFreqReselection* field in the MIB indicates that the intra-frequency reselection operation is allowed, for example, the *intraFreqReselection* field is set to "allowed", in this case, the terminal device may consider an intra-frequency neighboring cell of the current cell as a candidate cell for cell reselection.

If the *intraFreqReselection* field in the MIB indicates that the intra-frequency reselection operation is not allowed, for example, the *intraFreqReselection* field is set to "not allowed", the terminal device (in a specific period of time) does not consider the intra-frequency neighboring cell of the current cell as a candidate cell for cell reselection.

It should be understood that the cell/current cell is a cell that sends the MIB/SIB 1 information.

It should be understood that, the intra-frequency neighboring cell of the current cell may be understood as a neighboring cell having a same frequency as the current cell, for example, may be a neighboring cell having a same synchronization signal/physical broadcast channel block (synchronization signal/physical broadcast channel block, SSB) frequency as that of the cell.

Based on this technical solution, the terminal device (the RedCap UE) can use different IFRIs when the cell is barred, to improve efficiency of the terminal device to determine to perform a cell reselection operation.

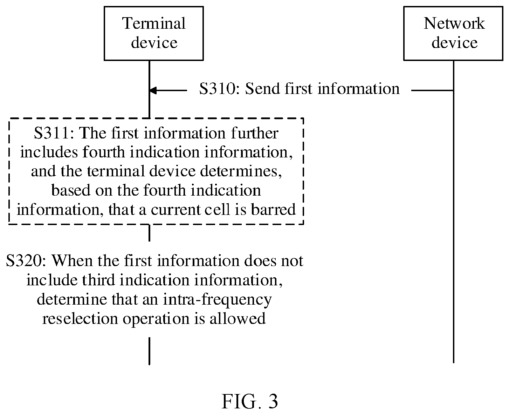

FIG. 3 is a schematic flowchart of a communication method according to an embodiment of this application. The method includes at least the following steps.

S310: A network device sends first information to a terminal device, and correspondingly, the terminal device receives the first information.

S320: When the first information does not include third indication information, the terminal device determines that an intra-frequency reselection operation is allowed, where the third indication information indicates whether the intra-frequency reselection operation is allowed.

Specifically, the terminal device may be reduced capability user equipment RedCap UE, the first information may be a system information block 1 SIB 1, and the third indication information may be a RedCap specific *intraFreqReselection* field in the SIB 1.

In a possible implementation, the terminal device receives the first information SIB 1. If the first information SIB 1 does not include the RedCap specific *intraFreqReselection* field, in this case, the terminal device determines that the intra-frequency reselection operation is allowed, that is, the terminal device may consider that the intra-frequency reselection operation is allowed. In this case, the terminal device may consider an intra-frequency neighboring cell of the current cell as a candidate cell for cell reselection.

In a possible implementation, the terminal device receives the first information SIB 1. If the first information SIB 1 does not include the RedCap specific *intraFreqReselection* field, in this case, the terminal device obtains an *intraFreqReselection* field in the MIB, and determines, based on the *intraFreqReselection* field in the MIB, whether to perform the intra-frequency reselection operation.

Specifically, if the *intraFreqReselection* field in the MIB indicates that the intra-frequency reselection operation is allowed, for example, the *intraFreqReselection* field is set to "allowed", in this case, the terminal device may consider the intra-frequency neighboring cell of the current cell as a candidate cell for cell reselection.

If the *intraFreqReselection* field in the MIB indicates that the intra-frequency reselection operation is not allowed, for example, the *intraFreqReselection* field is set to "not allowed", the terminal device (in a specific period of time) does not consider the intra-frequency neighboring cell of the current cell as a candidate cell for cell reselection.

Optionally, before S320, the method may further include S311. The first information received by the terminal device further includes fourth indication information, and the terminal device determines, based on the fourth indication information, that the current cell of the terminal device is barred, where the fourth indication information indicates that the current cell is barred.

Specifically, the fourth indication information may be a RedCap specific *cellBarred* field in the SIB 1. The terminal device indicates, based on the RedCap specific *cellBarred* field in the SIB 1, that the cell is barred. For example, the RedCap specific *cellBarred* field is set to "barred", to determine that the current cell is barred, that is, the terminal device determines that the terminal device cannot camp on the current cell.

It should be noted that S311 may be an optional step, that is, S311 may be a condition for performing S320. In other words, the terminal device determines, only when determining, based on the RedCap specific *cellBarred* field in the SIB 1, that the current cell is barred, whether the SIB 1 includes the RedCap specific *intraFreqReselection* field.

Based on this technical solution, a behavior rule when a RedCap specific IFRI is not sent can be designed, to specify how the terminal device (the RedCap UE) determines the intra-frequency reselection operation.

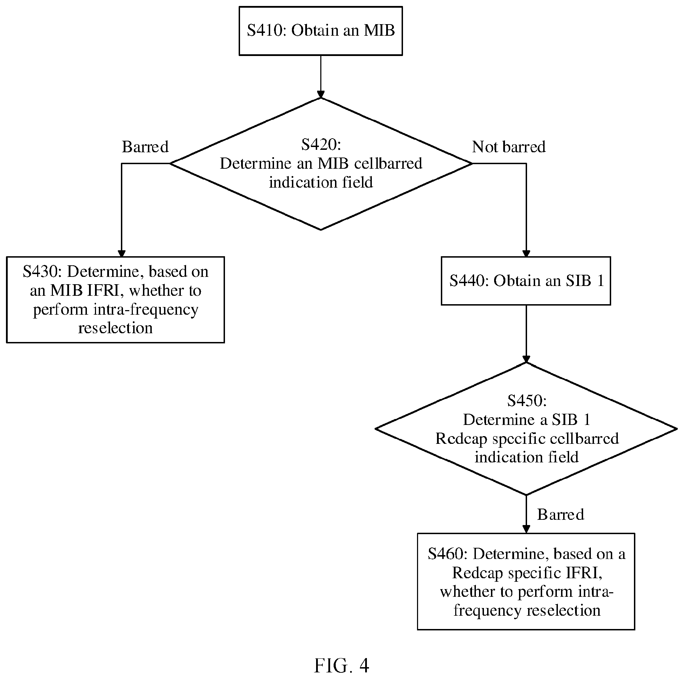

FIG. 4 is a schematic flowchart of a communication method according to an embodiment of this application. The method includes at least the following steps.

S410: RedCap UE obtains an MIB, where the MIB includes a *cellBarred* field, and the *cellBarred* field indicates whether a current cell of the RedCap UE is barred.

S420: The RedCap UE determines whether the *cellBarred* field included in the MIB indicates that the current cell is barred.

In a possible implementation, if the *cellBarred* field included in the MIB indicates that the current cell is barred, for example, the *cellBarred* field is set to "barred". In this case, the terminal device determines that the terminal device cannot camp on the current cell. In this case, step S430 is performed.

S430: The RedCap UE determines, based on an *intraFreqReselection* field in the MIB, whether to perform an intra-frequency reselection operation.

Specifically, if the *intraFreqReselection* field in the MIB indicates that the intra-frequency reselection operation is allowed, for example, the *intraFreqReselection* field is set to "allowed", the RedCap UE may consider an intra-frequency neighboring cell of the current cell as a candidate cell for cell reselection.

If the *intraFreqReselection* field in the MIB indicates that the intra-frequency reselection operation is not allowed, for example, the *intraFreqReselection* field is set to "not allowed", the RedCap UE (in a specific period of time) does not consider the intra-frequency neighboring cell of the current cell as a candidate cell for cell reselection.

In another possible implementation, if the *cellBarred* field in the MIB indicates that the cell is not barred, for example, the *cellBarred* field is set to "not barred", steps S440 to S460 are performed.

S440: The RedCap UE obtains an SIB 1, where the SIB 1 includes a RedCap specific *cellBarred* field, and the RedCap specific *cellBarred* field indicates whether the current cell of the RedCap UE is barred.

S450: The RedCap UE determines that the RedCap specific *cellBarred* field included in the SIB 1 indicates that the current cell is barred, that is, the RedCap UE determines that the RedCap UE cannot camp on the current cell. In this case, S460 is performed.

It may be understood that a condition for the RedCap UE to determine, based on an indication of a RedCap specific *intraFreqReselection* field in the SIB 1, whether the intra-frequency reselection operation can be performed may be that the RedCap UE determines, based on the RedCap specific *cellBarred* field in the SIB 1, that the cell is barred, that is, the RedCap UE determines that the RedCap UE cannot camp on the current cell.

An example is as follows:
It is assumed that the RedCap specific *cellBarred* field indicates that RedCap UEs with a 1Rx branch and 2Rx branches are not allowed to camp on the current cell. The RedCap UEs with the 1Rx branch and the 2Rx branches determine that the RedCap UEs with the 1Rx branch and the 2Rx branches cannot camp on the current cell, and subsequently determines, based on the indication of the RedCap specific *intraFreqReselection* field in the SIB 1, whether the intra-frequency reselection operation can be performed.

It is assumed that the RedCap specific *cellBarred* field indicates that the RedCap UE with the 1Rx branch is not allowed to camp on the current cell. The RedCap UE with the 1Rx branch determines that the RedCap UE with the 1Rx branch cannot camp on the current cell, and subsequently determines, based on the indication of the RedCap specific *intraFreqReselection* field in the SIB 1, whether the intra-frequency reselection operation can be performed. However, the RedCap UE with the 2Rx branches can camp on the current cell.

It is assumed that the RedCap specific *cellBarred* field indicates that the RedCap UE with the 2Rx branches is not allowed to camp on the current cell. The RedCap UE with the 2Rx branches determines that the RedCap UE with the 2Rx branches cannot camp on the current cell, and subsequently determines, based on the indication of the RedCap specific *intraFreqReselection* field in the SIB 1, whether the intra-frequency reselection operation can be performed. However, the RedCap UE with the 1Rx branch can camp on the current cell.

S460: The RedCap UE determines, based on the RedCap specific *intraFreqReselection* field in the SIB 1, whether to perform the intra-frequency reselection operation.

Specifically, if the RedCap specific *intraFreqReselection* field in the SIB 1 indicates that the intra-frequency reselection operation is allowed, the RedCap UE may consider the intra-frequency neighboring cell of the current cell as a candidate cell for cell reselection. If the RedCap specific *intraFreqReselection* field in the SIB 1 indicates that the intra-frequency reselection operation is not allowed, the RedCap UE (in a specific period of time) does not consider the intra-frequency neighboring cell of the current cell as a candidate cell for cell reselection.

It should be noted that, after S430 is performed, the Redcap UE no longer needs to obtain the SIB 1. It may be understood that if S430 is performed, S440 to S460 are not performed.

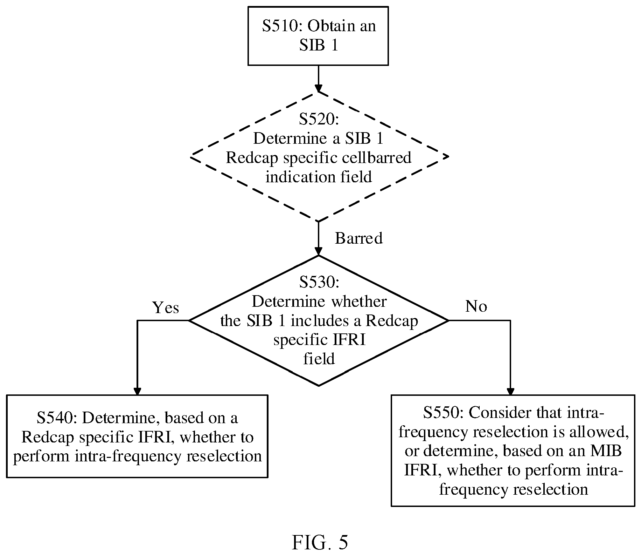

FIG. 5 is a schematic flowchart of a communication method according to an embodiment of this application. The method includes at least the following steps.

S510: RedCap UE obtains an SIB 1, where the SIB 1 includes a RedCap specific *cellBarred* field, and the RedCap specific *cellBarred* field indicates whether a current cell of the RedCap UE is barred.

S520: The RedCap UE determines that the RedCap specific *cellBarred* field included in the SIB 1 indicates that the current cell is barred, for example, the RedCap specific *cellBarred* field is set to "barred", that is, the RedCap UE determines that the RedCap UE cannot camp on the current cell, and performs step S530.

It should be understood that the step S520 is an optional step. In other words, S520 may be understood as a condition for performing S520. In other words, the terminal device determines, only when determining, based on the RedCap specific *cellBarred* field in the SIB 1, that the current cell is barred, whether the SIB 1 includes a RedCap specific *intraFreqReselection* field.

An example is as follows:
It is assumed that the RedCap specific *cellBarred* field indicates that RedCap UEs with a 1Rx branch and 2Rx branches are not allowed to camp on the current cell. The RedCap UEs with the 1Rx branch and the 2Rx branches determine that the RedCap UEs cannot camp on the current cell, and subsequently determines whether the SIB 1 includes the RedCap specific *intraFreqReselection* field.

It is assumed that the RedCap specific *cellBarred* field indicates that the RedCap UE with the 1Rx branch is not allowed to camp on the current cell. The RedCap UE with the 1Rx branch determines that the RedCap UE with the 1Rx branch cannot camp on the current cell, and subsequently determines whether the SIB 1 includes the RedCap specific *intraFreqReselection* field. However, the RedCap UE with the 2Rx branches can camp on the current cell.

It is assumed that the RedCap specific *cellBarred* field indicates that the RedCap UE with the 2Rx branches is not allowed to camp on the current cell. The RedCap UE with the 2Rx branches determines that the RedCap UE with the 2Rx branches cannot camp on the current cell, and subsequently determines whether the SIB 1 includes the RedCap specific *intraFreqReselection* field. However, the RedCap UE with the 1Rx branch can camp on the current cell.

S530: The RedCap UE determines whether the SIB 1 includes the RedCap specific *intraFreqReselection* field.

In a possible implementation, if the SIB 1 includes the RedCap specific *intraFreqReselection* field, step S540 is performed.

S540: The RedCap UE determines, based on the RedCap specific *intraFreqReselection* field, whether to perform an intra-frequency reselection operation.

Specifically, if the RedCap specific *intraFreqReselection* field in the SIB 1 indicates that the intra-frequency reselection operation is allowed, the RedCap UE may consider an intra-frequency neighboring cell of the current cell as a candidate cell for cell reselection. If the RedCap specific *intraFreqReselection* field in the SIB 1 indicates that the intra-frequency reselection operation is not allowed, the RedCap UE (in a specific period of time) does not consider the intra-frequency neighboring cell of the current cell as a candidate cell for cell reselection.

In another possible implementation, if the SIB 1 does not include the RedCap specific *intraFreqReselection* field, step S550 is performed.

Specifically, if the RedCap UE determines that the SIB 1 does not include the RedCap specific *intraFreqReselection* field, there may be two possible implementations of an intra-frequency reselection rule of the RedCap UE.

In a possible implementation, the RedCap UE considers that the intra-frequency reselection operation is allowed. In this case, the RedCap UE may consider the intra-frequency neighboring cell of the current cell as a candidate cell for cell reselection.

In another possible implementation, the RedCap UE determines, based on an *intraFreqReselection* field in an MIB, whether the intra-frequency reselection operation is allowed.

Specifically, if the *intraFreqReselection* field in the MIB indicates that the intra-frequency reselection operation is allowed, for example, the *intraFreqReselection* field is set to "allowed", the RedCap UE may consider the intra-frequency neighboring cell of the current cell as a candidate cell for cell reselection.

If the *intraFreqReselection* field in the MIB indicates that the intra-frequency reselection operation is not allowed, for example, the *intraFreqReselection* field is set to "not allowed", the RedCap UE (in a specific period of time) does not consider the intra-frequency neighboring cell of the current cell as a candidate cell for cell reselection.

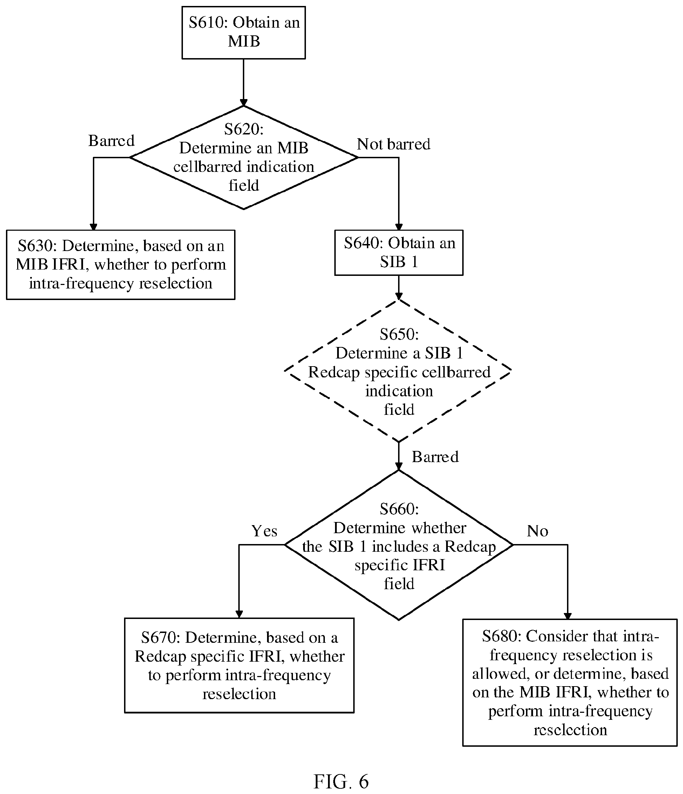

It should be noted that the foregoing methods may also be combined. FIG. 6 is a schematic flowchart of a communication method according to still another embodiment of this application. The method specifically includes the following steps.

S610: RedCap UE obtains an MIB, where the MIB includes a *cellBarred* field, and the *cellBarred* field indicates whether a current cell of the RedCap UE is barred.

S620: The RedCap UE determines whether the *cellBarred* field included in the MIB indicates that the current cell is barred.

In a possible implementation, if the *cellBarred* field included in the MIB indicates that the current cell is barred, for example, the *cellBarred* field is set to "barred", in this case, the terminal device determines that the terminal device cannot camp on the current cell. In this case, step S630 is performed.

S630: The RedCap UE determines, based on an *intraFreqReselection* field in the MIB, whether to perform an intra-frequency reselection operation. S630 is similar to S430. For brevity, details are not described herein again in this application.

In another possible implementation, if the *cellBarred* field in the MIB indicates that the cell is not barred, for example, the *cellBarred* field is set to "not barred", step S640 is performed.

S640: The RedCap UE obtains an SIB 1, where the SIB 1 includes a RedCap specific *cellBarred* field, and the RedCap specific *cellBarred* field indicates whether the current cell of the RedCap UE is barred.

Optionally, the method may further include S650. The RedCap UE determines that the RedCap specific *cellBarred* field included in the SIB 1 indicates that the current cell is barred, for example, the RedCap specific *cellBarred* field is set to "barred", that is, the RedCap UE determines that the RedCap UE cannot camp on the current cell, and performs step S660.

It should be understood that the step S650 is an optional step. In other words, S650 may be understood as a condition for performing S660. In other words, the terminal device determines, only when determining, based on the RedCap specific *cellBarred* field in the SIB 1, that the current cell is barred, whether the SIB 1 includes a RedCap specific *intraFreqReselection* field.

An example is as follows.

It is assumed that the RedCap specific *cellBarred* field indicates that RedCap UEs with a 1Rx branch and 2Rx branches are not allowed to camp on the current cell. The RedCap UEs with the 1Rx branch and the 2Rx branches determine that the RedCap UEs cannot camp on the current cell, and subsequently determines whether the SIB 1 includes the RedCap specific *intraFreqReselection* field.

It is assumed that the RedCap specific *cellBarred* field indicates that the RedCap UE with the 1Rx branch is not allowed to camp on the current cell. The RedCap UE with the 1Rx branch determines that the RedCap UE with the 1Rx branch cannot camp on the current cell, and subsequently determines whether the SIB 1 includes the RedCap specific *intraFreqReselection* field. However, the RedCap UE with the 2Rx branches can camp on the current cell.

It is assumed that the RedCap specific *cellBarred* field indicates that the RedCap UE with the 2Rx branches is not allowed to camp on the current cell. The RedCap UE with the 2Rx branches determines that the RedCap UE with the 2Rx branches cannot camp on the current cell, and subsequently determines whether the SIB 1 includes the RedCap specific *intraFreqReselection* field. However, the RedCap UE with the 1Rx branch can camp on the current cell.

S660: The RedCap UE determines whether the SIB 1 includes the RedCap specific *intraFreqReselection* field.

In a possible implementation, if the SIB 1 includes the RedCap specific *intraFreqReselection* field, step S670 is performed.

S670: The RedCap UE determines, based on the RedCap specific *intraFreqReselection* field, whether to perform the intra-frequency reselection operation. S670 is similar to S540. For brevity, details are not described herein again in this application.

In another possible implementation, if the SIB 1 does not include the RedCap specific *intraFreqReselection* field, step S680 is performed.

Specifically, if the RedCap UE determines that the SIB 1 does not include the RedCap specific *intraFreqReselection* field, there may be two possible implementations of an intra-frequency reselection rule of the RedCap UE.

In a possible implementation, the RedCap UE considers that the intra-frequency reselection operation is allowed. In this case, the RedCap UE may consider an intra-frequency neighboring cell of the current cell as a candidate cell for cell reselection.

In another possible implementation, the RedCap UE determines, based on the *intraFreqReselection* field in the MIB, whether the intra-frequency reselection operation is allowed.

Specifically, if the *intraFreqReselection* field in the MIB indicates that the intra-frequency reselection operation is allowed, for example, the *intraFreqReselection* field is set to "allowed", the RedCap UE may consider the intra-frequency neighboring cell of the current cell as a candidate cell for cell reselection.

If the *intraFreqReselection* field in the MIB indicates that the intra-frequency reselection operation is not allowed, for example, the *intraFreqReselection* field is set to "not allowed", the RedCap UE (in a specific period of time) does not consider the intra-frequency neighboring cell of the current cell as a candidate cell for cell reselection.

According to these technical solutions, the terminal device (the RedCap UE) can use different IFRIs when a cell is barred, to improve efficiency of the terminal device to determine to perform a cell reselection operation, and a behavior rule when a RedCap specific IFRI is not sent can be designed, to specify how the terminal device (the RedCap UE) determines an intra-frequency reselection operation.

Embodiments described in this specification may be independent solutions, or may be combined based on internal logic. All these solutions fall within the protection scope of this application.

It may be understood that, in the foregoing method embodiments, the methods and the operations that are implemented by the devices may alternatively be implemented by a component (for example, a chip or a circuit) of a corresponding device.

The foregoing mainly describes the solutions provided in embodiments of this application from a perspective of interaction between the devices. It may be understood that, to implement the foregoing functions, each network element such as a transmit device or a receive device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmit device or a receive device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. Descriptions are provided below by using an example in which each functional module is obtained through division corresponding to each function.

It should be understood that specific examples in embodiments of this application are merely intended to help a person skilled in the art better understand embodiments of this application, but are not intended to limit the scope of embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

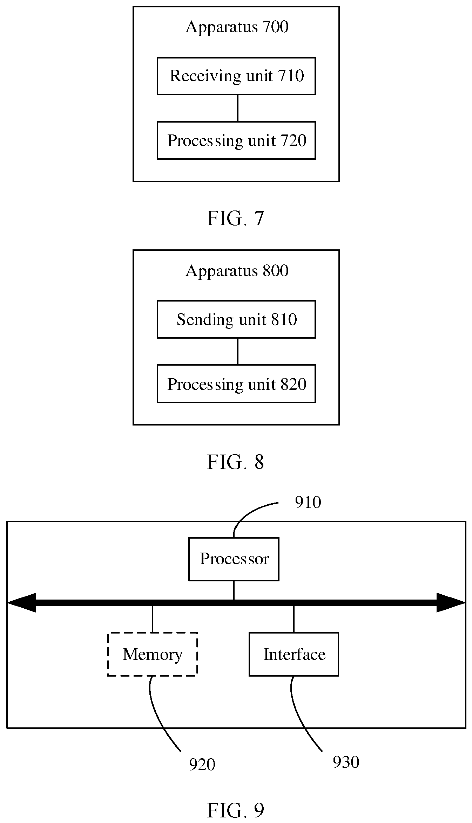

The methods provided in embodiments of this application are described above in detail with reference to FIG. 2 to FIG. 6. The following describes in detail apparatuses provided in embodiments of this application with reference to FIG. 7 to FIG. 9. It should be understood that descriptions of apparatus embodiments correspond to the descriptions of the method embodiments. Therefore, for content that is not described in detail, refer to the foregoing method embodiments. For brevity, details are not described herein again.

FIG. 7 is a schematic diagram of a communication apparatus according to an embodiment of this application. The communication apparatus is configured to implement steps corresponding to the terminal device in the foregoing embodiments. As shown in FIG. 7, the communication apparatus 700 includes a receiving unit 710 and a processing unit 720.

In a first embodiment, the communication apparatus is configured to implement steps corresponding to the terminal device in the foregoing embodiments.

The receiving unit 710 is configured to receive a master information block MIB, where the MIB includes first indication information and second indication information, the first indication information indicates whether a cell is barred, and the second indication information indicates whether an intra-frequency reselection operation is allowed. The processing unit 720 is configured to: when the first indication information indicates that the cell is barred, determine, based on the second indication information, whether to perform the intra-frequency reselection operation. The terminal device is reduced capability user equipment RedCap UE.

In a second embodiment, the communication apparatus is configured to implement steps corresponding to the terminal device in the foregoing embodiments.

The receiving unit 710 is configured to receive first information. The processing unit 720 is configured to: when the first information does not include third indication information, determine that an intra-frequency reselection operation is allowed. The third indication information indicates whether the intra-frequency reselection operation is allowed.

Optionally, in some embodiments, the first information further includes fourth indication information, and the processing unit 720 is further configured to determine, based on the fourth indication information, that a current cell of the terminal device is barred. The fourth indication information indicates whether the current cell of the terminal device is barred.

Optionally, in some embodiments, the terminal device is reduced capability user equipment RedCap UE.

FIG. 8 is a schematic diagram of a communication apparatus according to an embodiment of this application. The communication apparatus is configured to implement steps corresponding to the network device in the foregoing embodiments. As shown in FIG. 8, the communication apparatus 800 includes a sending unit 810 and a processing unit 820.

In a first embodiment, the communication apparatus is configured to implement steps corresponding to the network device in the foregoing embodiments.

The sending unit 810 is configured to send a master information block MIB, where the MIB includes first indication information and second indication information, the first indication information indicates whether a cell is barred, and the second indication information indicates whether an intra-frequency reselection operation is allowed. The processing unit 820 is configured to: when the first indication information indicates that the cell is barred, indicate, based on the second indication information, whether a terminal device performs the intra-frequency reselection operation. The terminal device is reduced capability user equipment RedCap UE.

In a second embodiment, the communication apparatus is configured to implement steps corresponding to the network device in the foregoing embodiments.

The sending unit 810 is configured to send first information. The processing unit 820 is configured to: when the first information does not include third indication information, indicate a terminal device to determine that an intra-frequency reselection operation is allowed. The third indication information indicates whether the intra-frequency reselection operation is allowed.

Optionally, in some embodiments, the first information further includes fourth indication information, and the processing unit 820 is further configured to: indicate, based on the fourth indication information, that a current cell of the terminal device is barred.

Optionally, in some embodiments, the terminal device is reduced capability user equipment RedCap UE.

It should be understood that division into the units in the communication apparatus is merely logical function division. During actual implementation, all or some of the units may be integrated into one physical entity, or may be physically separated. In addition, all the units in the communication apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the communication apparatus for implementation. In addition, each unit may alternatively be stored in a memory in a form of a program to be invoked by a processing element of the communication apparatus to perform a function of the unit. In addition, all or some of the units may be integrated, or may be implemented independently. The processing element herein may also be referred to as a processor, and may be an integrated circuit having a signal processing capability. In an implementation process, the steps of the foregoing methods or the foregoing modules may be implemented by using a hardware integrated logic circuit in the processor element, or may be implemented in a form of software invoked by the processing element.

In an example, the unit in any one of the foregoing communication apparatuses may be one or more integrated circuits configured to implement the foregoing methods, for example, one or more application specific integrated circuits (application specific integrated circuits, ASICs), or one or more digital signal processors (digital signal processors, DSPs), or one or more field programmable gate arrays (field programmable gate arrays, FPGAs), or a combination of at least two of these integrated circuit forms. For another example, when the units in the communication apparatus may be implemented in a form of scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

FIG. 9 is a schematic diagram of a communication apparatus according to an embodiment of this application. The communication apparatus is configured to implement operations of the terminal device and the network device in the foregoing embodiments. As shown in FIG. 9, the communication apparatus includes a processor 910 and an interface 930. The processor 910 is coupled to the interface 930. The interface 930 is configured to communicate with another device. The interface 930 may be a transceiver or an input/output interface. The interface 930 may be, for example, an interface circuit. Optionally, the communication apparatus may further include a memory 920, configured to store instructions executed by the processor 910, store input data for the processor 910 to run instructions, or store data generated after the processor 910 runs instructions.

The methods performed by the terminal device and the network device in the foregoing embodiments may be implemented by the processor 910 by invoking a program stored in a memory (which may be the memory 920 in the terminal device and the network device, or may be an external memory). In other words, the terminal device and the network device may include the processor 910. The processor 910 invokes a program in the memory to perform the method performed by the terminal device and the network device in the foregoing method embodiments. The processor herein may be an integrated circuit having a signal processing capability, for example, a CPU. The terminal device and the network device may be implemented by using one or more integrated circuits configured to implement the foregoing method, for example, one or more ASICs, one or more microprocessors DSPs, one or more FPGAs, or a combination of at least two of the integrated circuit forms. Alternatively, the foregoing implementations may be combined.

Specifically, functions/implementation processes of the units in FIG. 7 and FIG. 8 may be implemented by the processor 910 in the communication apparatus 900 shown in FIG. 9 by invoking computer-executable instructions stored in the memory 920. Alternatively, functions/implementation processes of the processing units in FIG. 7 and FIG. 8 may be implemented by the processor 910 in the communication apparatus 900 shown in FIG. 9 by invoking computer-executable instructions stored in the memory 920, and functions/implementation processes of the receiving units or the sending units in FIG. 7 and FIG. 8 may be implemented by the interface 930 in the communication apparatus 900 shown in FIG. 9.

It should be understood that the processing unit in the apparatus includes a processor. The processor is coupled to a memory. The memory is configured to store a computer program or instructions and/or data. The processor is configured to execute the computer program or the instructions and/or the data stored in the memory, so that the method in the foregoing method embodiments is executed.

It should be further understood that division of units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a chip in the communication apparatus performs any communication method provided in the foregoing embodiments of this application.

The foregoing processor may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, or an electrically erasable programmable memory. The storage medium is located in the memory, and the processor reads a message in the memory and completes the steps in the foregoing method in combination with hardware of the processor.

It may be understood that the memory element in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another appropriate type.

It should be understood that "one embodiment" or "an embodiment" mentioned throughout the specification indicates that a particular characteristic, structure or property that is related to the embodiment is included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the terms "system" and "network" may be used interchangeably in this specification.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application, which is subject to the protection scope of the appended set of claims.

## Claims

1. A communication method performed by a reduced capability user equipment, RedCap UE, or a chip in a RedCap UE, comprising:
receiving (S410, S610) a master information block, MIB, wherein a *cellBarred* field in the MIB indicates whether a cell is barred;
if the *cellBarred* field in the MIB indicates the cell is barred, determining (S420, S620) by the RedCap UE that the cell is barred; and
if the *cellBarred* field in the MIB indicates the cell is not barred, and if a system information block 1, SIB 1, does not comprise a RedCap specific *intraFreqReselection* field, determining (S460, S660) that the RedCap UE is allowed to perform an intra-frequency reselection operation, wherein the SIB 1 is received (S440, S640) after the MIB; and
wherein the RedCap specific *intraFreqReselection* field indicates whether the RedCap UE is allowed to perform the intra-frequency reselection operation.

2. The method according to claim 1, wherein the RedCap UE is a RedCap UE with a 1Rx branch or with 2Rx branches.

3. The method according to claim 1 or 2, wherein the method further comprises:
if the *cellBarred* field in the MIB indicates the cell is not barred, and if the SIB 1 comprises the RedCap specific *intraFreqReselection* field, determining whether the RedCap UE is allowed to perform the intra-frequency reselection operation based on the RedCap specific *intraFreqReselection* field;
wherein the RedCap UE is a RedCap UE with a 1Rx branch, and a RedCap specific *cellBarred* field in the SIB 1 indicates the RedCap UE with 1RX branch is not allowed to camp on the cell.

4. The method according to claim 1 or 2, wherein the method further comprises:
if the *cellBarred* field in the MIB indicates the cell is not barred, and if the SIB 1 comprises the RedCap specific *intraFreqReselection* field, determining that whether the RedCap UE is allowed to perform the intra-frequency reselection operation based on the RedCap specific *intraFreqReselection* field;
wherein the RedCap UE is a RedCap UE with a 2Rx branches, and a RedCap specific *cellBarred* field in the SIB 1 indicates the RedCap UE with 2RX branches is not allowed to camp on the cell.

5. The method according to any one of claims 1 to 4, wherein the RedCap UE is in an radio resource control, RRC, idle mode or in an RRC inactive mode.

6. A communication method performed by a network device or a chip in a network device, comprising:
sending (S410, S610) a master information block, MIB, wherein a *cellBarred* field in the MIB indicates whether a cell is barred;
if the *cellBarred* field in the MIB indicates the cell is not barred, and if a system information block 1, SIB 1, does not comprise a reduced capability, RedCap, specific *intraFreqReselection* field, indicating (S460, S660) that a reduced capability user equipment, RedCap UE, is allowed to perform an intra-frequency reselection operation, wherein the SIB 1 is sent (S440, S640) after the MIB; and
wherein the RedCap specific *intraFreqReselection* field indicates whether the RedCap UE is allowed to perform the intra-frequency reselection operation.

7. The method according to claim 6, wherein the RedCap UE is a RedCap UE with a 1Rx branch or with 2Rx branches.

8. The method according to claim 6 or 7, wherein the RedCap UE is in an radio resource control, RRC, idle mode or in an RRC inactive mode.

9. A communication apparatus, comprising:
a processor; and
an interface coupled to the processor, the interface is used to communicate with another apparatus;
when a program or instructions are executed by the processor, the method according to any one of claims 1 to 5 is implemented.

10. A communication apparatus, comprising:
a processor; and
an interface coupled to the processor, the interface is used to communicate with another apparatus;
when a program or instructions are executed by the processor, the method according to any one of claims 6 to 8 is implemented.

11. A computer-readable storage medium, wherein the computer-readable storage medium stores a computer program, and when the computer program is run, the method according to any one of claims 1 to 5 is implemented.

12. A computer-readable storage medium, wherein the computer-readable storage medium stores a computer program, and when the computer program is run, the method according to any one of claims 6 to 8 is implemented.

13. A program product, wherein the program product comprises a computer program, and when the computer program is run, the method according to any one of claims 1 to 5 is implemented.

14. A program product, wherein the program product comprises a computer program, when the computer program is run, the method according to any one of claims 6 to 8 is implemented.

## Patentansprüche

1. Kommunikationsverfahren, ausgeführt von einem Benutzergerät mit eingeschränkter Leistungsfähigkeit (RedCap-UE) oder einem Chip in einem RedCap-UE, umfassend:
Empfangen (S410, S610) eines Master-Informationsblocks (MIB), wobei ein *cellBarred-Feld* in dem MIB anzeigt, ob eine Zelle gesperrt ist;
wenn das *cellBarred-Feld* in dem MIB anzeigt, dass die Zelle gesperrt ist, Bestimmen (S420, S620) durch das RedCap-UE, dass die Zelle gesperrt ist; und
wenn das *cellBarred-Feld* in dem MIB anzeigt, dass die Zelle nicht gesperrt ist, und wenn ein Systeminformationsblock 1, SIB 1, kein RedCap-spezifisches *intraFreqReselection-Feld* umfasst, Bestimmen (S460, S660), dass das RedCap-UE eine Neuauswahloperation innerhalb einer Frequenz ausführen darf, wobei der SIB 1 (S440, S640) nach dem MIB empfangen wird; und
wobei das RedCap-spezifische *intraFreqReselection-Feld* anzeigt, ob das RedCap-UE die Neuauswahloperation innerhalb der Frequenz ausführen darf.

2. Verfahren gemäß Anspruch 1, wobei es sich bei dem RedCap-UE um ein RedCap-UE mit einem 1Rx-Zweig oder mit 2Rx-Zweigen handelt.

3. Verfahren gemäß Anspruch 1 oder 2, wobei das Verfahren ferner Folgendes umfasst:
wenn das *cellBarred-Feld* in dem MIB anzeigt, dass die Zelle nicht gesperrt ist, und wenn der SIB 1 das RedCap-spezifische *intraFreqReselection-Feld* umfasst, Bestimmen, ob das RedCap-UE die Neuauswahloperation innerhalb der Frequenz basierend auf dem RedCap-spezifischen *intraFreqReselection-Feld* ausführen darf;
wobei das RedCap-UE ein RedCap-UE mit einem 1Rx-Zweig ist und ein RedCap-spezifisches *cellBarred-Feld* in dem SIB 1 anzeigt, dass sich das RedCap-UE mit 1RX-Zweig nicht in der Zelle aufhalten darf.

4. Verfahren gemäß Anspruch 1 oder 2, wobei das Verfahren ferner Folgendes umfasst:
wenn das *cellBarred-Feld* in dem MIB anzeigt, dass die Zelle nicht gesperrt ist, und wenn der SIB 1 das RedCap-spezifische *intraFreqReselection-Feld* umfasst, Bestimmen, ob das RedCap-UE die Neuauswahloperation innerhalb der Frequenz basierend auf dem RedCap-spezifischen *intraFreqReselection-Feld* ausführen darf;
wobei das RedCap-UE ein RedCap-UE mit 2Rx-Zweigen ist und ein RedCap-spezifisches *cellBarred-Feld* in dem SIB 1 anzeigt, dass sich das RedCap-UE mit 2RX-Zweigen nicht in der Zelle aufhalten darf.

5. Verfahren gemäß einem der Ansprüche 1 bis 4, wobei sich das RedCap-UE in einem Funkressourcensteuerungs(RRC)-Leerlaufmodus oder in einem RRC-inaktiven Modus befindet.

6. Kommunikationsverfahren, ausgeführt durch eine Netzwerkvorrichtung oder einen Chip in einer Netzwerkvorrichtung, umfassend:
Senden (S410, S610) eines Master-Informationsblocks (MIB), wobei ein *cellBarred-Feld* in dem MIB anzeigt, ob eine Zelle gesperrt ist;
wenn das *cellBarred-Feld* in dem MIB anzeigt, dass die Zelle nicht gesperrt ist, und wenn ein Systeminformationsblock 1, SIB 1, kein spezifisches *intraFreqReselection-Feld* mit reduzierter Kapazität (RedCap) umfasst, Anzeigen (S460, S660), dass ein Benutzergerät mit reduzierter Kapazität (RedCap-UE) eine Neuauswahloperation innerhalb der Frequenz ausführen darf, wobei der SIB 1 nach dem MIB gesendet wird (S440, S640); und
wobei das RedCap-spezifische *intraFreqReselection-Feld* anzeigt, ob das RedCap-UE die Neuauswahloperation innerhalb der Frequenz ausführen darf.

7. Verfahren gemäß Anspruch 6, wobei es sich bei dem RedCap-UE um ein RedCap-UE mit einem 1Rx-Zweig oder mit 2Rx-Zweigen handelt.

8. Verfahren gemäß einem der Ansprüche 6 oder 7, wobei sich das RedCap-UE in einem Funkressourcensteuerungs(RRC)-Leerlaufmodus oder in einem RRC-inaktiven Modus befindet.

9. Kommunikationsgerät, umfassend:
einen Prozessor; und
eine Schnittstelle, die mit dem Prozessor verbunden ist, wobei die Schnittstelle zur Kommunikation mit einem anderen Gerät verwendet wird;
wobei, wenn ein Programm oder eine Anweisung durch den Prozessor ausgeführt wird, das Verfahren gemäß einem der Ansprüche 1 bis 5 implementiert wird.

10. Kommunikationsgerät, umfassend:
einen Prozessor; und
eine Schnittstelle, die mit dem Prozessor verbunden ist, wobei die Schnittstelle zur Kommunikation mit einem anderen Gerät verwendet wird;
wobei, wenn ein Programm oder eine Anweisung durch den Prozessor ausgeführt wird, das Verfahren gemäß einem der Ansprüche 6 bis 8 implementiert wird.

11. Computerlesbares Speichermedium, wobei das computerlesbare Speichermedium ein Computerprogramm speichert und, wenn das Computerprogramm ausgeführt wird, das Verfahren gemäß einem der Ansprüche 1 bis 5 implementiert wird.

12. Computerlesbares Speichermedium, wobei das computerlesbare Speichermedium ein Computerprogramm speichert und, wenn das Computerprogramm ausgeführt wird, das Verfahren gemäß einem der Ansprüche 6 bis 8 implementiert wird.

13. Programmprodukt, wobei das Programmprodukt ein Computerprogramm umfasst; und, wenn das Computerprogramm ausgeführt wird, das Verfahren gemäß einem der Ansprüche 1 bis 5 implementiert wird.

14. Programmprodukt, wobei das Programmprodukt ein Computerprogramm umfasst; und, wenn das Computerprogramm ausgeführt wird, das Verfahren gemäß einem der Ansprüche 6 bis 8 implementiert wird.

## Revendications

1. Procédé de communication réalisé par un équipement utilisateur à capacité réduite, UE RedCap, ou une puce dans un UE RedCap, comprenant :
la réception (S410, S610) d'un bloc d'informations maître, MIB, dans lequel un champ *cellBarred* dans le MIB indique si une cellule est interdite ;
si le champ *cellBarred* dans le MIB indique que la cellule est interdite, la détermination (S420, S620) par l'UE RedCap que la cellule est interdite ; et
si le champ *cellBarred* dans le MIB indique que la cellule n'est pas interdite, et si un bloc d'informations système 1, SIB 1, ne comprend pas un champ *intraFreqReselection* spécifique à RedCap, la détermination (S460, S660) que l'UE RedCap est autorisé à réaliser une opération de resélection intra-fréquence, dans lequel le SIB 1 est reçu (S440, S640) après le MIB ; et
dans lequel le champ *intraFreqReselection* spécifique à RedCap indique si l'UE RedCap est autorisé à réaliser l'opération de resélection intra-fréquence.

2. Procédé selon la revendication 1, dans lequel l'UE RedCap est un UE RedCap avec une branche 1Rx ou avec des branches 2Rx.

3. Procédé selon la revendication 1 ou 2, dans lequel le procédé comprend également :
si le champ *cellBarred* dans le MIB indique que la cellule n'est pas interdite, et si le SIB 1 comprend le champ *intraFreqReselection* spécifique à RedCap, le fait de déterminer si l'UE RedCap est autorisé à réaliser l'opération de resélection intra-fréquence sur la base du champ *intraFreqReselection* spécifique à RedCap ;
dans lequel l'UE RedCap est un UE RedCap avec une branche 1Rx, et un champ *cellBarred* spécifique à RedCap dans le SIB 1 indique que l'UE RedCap avec une branche 1Rx n'est pas autorisé à camper sur la cellule.

4. Procédé selon la revendication 1 ou 2, dans lequel le procédé comprend également :
si le champ *cellBarred* dans le MIB indique que la cellule n'est pas interdite, et si le SIB 1 comprend le champ *intraFreqReselection* spécifique à RedCap, le fait de déterminer que si l'UE RedCap est autorisé à réaliser l'opération de resélection intra-fréquence sur la base du champ *intraFreqReselection* spécifique à RedCap ;
dans lequel l'UE RedCap est un UE RedCap avec des branches 2Rx, et un champ *cellBarred* spécifique à RedCap dans le SIB 1 indique que l'UE RedCap avec des branches 2Rx n'est pas autorisé à camper sur la cellule.

5. Procédé selon l'une quelconque des revendications 1 à 4, dans lequel l'UE RedCap est dans un mode sans activité de commande de ressources radio, RRC, ou dans un mode RRC inactif.

6. Procédé de communication réalisé par un dispositif réseau ou une puce dans un dispositif réseau, comprenant :
l'envoi (S410, S610) d'un bloc d'informations maître, MIB, dans lequel un champ *cellBarred* dans le MIB indique si une cellule est interdite ;
si le champ *cellBarred* dans le MIB indique que la cellule n'est pas interdite et si un bloc d'informations système 1, SIB 1 ne comprend pas de champ *intraFreqReselection* spécifique à capacité réduite, RedCap, l'indication (S460, S660) qu'un équipement utilisateur à capacité réduite, UE RedCap, est autorisé à réaliser une opération de resélection intra-fréquence, dans lequel le SIB 1 est envoyé (S440, S640) après le MIB ; et
dans lequel le champ *intraFreqReselection* spécifique à RedCap indique si l'UE RedCap est autorisé à réaliser l'opération de resélection intra-fréquence.

7. Procédé selon la revendication 6, dans lequel l'UE RedCap est un UE RedCap avec une branche 1Rx ou avec des branches 2Rx.

8. Procédé selon la revendication 6 ou 7, dans lequel l'UE RedCap est dans un mode sans activité de commande de ressources radio, RRC, ou dans un mode RRC inactif.

9. Appareil de communication, comprenant :
un processeur ; et
une interface couplée au processeur, l'interface est utilisée pour communiquer avec un autre appareil ;
lorsqu'un programme ou des instructions sont exécutés par le processeur, le procédé selon l'une quelconque des revendications 1 à 5 est mis en œuvre.

10. Appareil de communication, comprenant :
un processeur ; et
une interface couplée au processeur, l'interface est utilisée pour communiquer avec un autre appareil ;
lorsqu'un programme ou des instructions sont exécutés par le processeur, le procédé selon l'une quelconque des revendications 6 à 8 est mis en œuvre.

11. Support de stockage lisible par ordinateur, dans lequel le support de stockage lisible par ordinateur stocke un programme informatique, et lorsque le programme informatique est exécuté, le procédé selon l'une quelconque des revendications 1 à 5 est mis en œuvre.

12. Support de stockage lisible par ordinateur, dans lequel le support de stockage lisible par ordinateur stocke un programme informatique, et lorsque le programme informatique est exécuté, le procédé selon l'une quelconque des revendications 6 à 8 est mis en œuvre.

13. Produit de programme, dans lequel le produit de programme comprend un programme informatique, et lorsque le programme informatique est exécuté, le procédé selon l'une quelconque des revendications 1 à 5 est mis en œuvre.

14. Produit de programme, dans lequel le produit de programme comprend un programme informatique, lorsque le programme informatique est exécuté, le procédé selon l'une quelconque des revendications 6 à 8 est mis en œuvre.
